# EUROPEAN PATENT APPLICATION

(11) **EP 4 105 678 A1**
(43) Date of publication of application: **21.12.2022**
(21) Application number: 21180398.6
(22) Date of filing: 18.06.2021
(51) Int. Cl.: G01S 7/03, G01S 13/931, H01Q 1/42, G01S 7/02, G01S 7/481

(54) **ILLUMINATED COVER FOR ELECTROMAGNETIC TRANSMITTER AND RECEIVER**

(71) Applicant: HELLA Saturnus Slovenija d.o.o., 1000 Ljubljana (SI)
(72) Inventor: BAJEC STRLE, Alenka, Ljubljana (SI); BERKOPEC, Bostjan, Ljubljana (SI)
(74) Representative: Zacco Patent- und Rechtsanwalts GmbH

(57) **Abstract**

The present invention concerns an illuminated cover (1) for an electromagnetic sensor, such as a radar sensor (20). The cover comprises a multilayer plate (10) that is substantially transparent to the electromagnetic radiation emitted and/or received by the electromagnetic sensor. The plate includes a first layer (100) of optically transparent material and a second layer (110) on at least one surface of the first layer and having a lower refractive index than the first layer. A graphic layer (140) is provided on the second layer. At least one light source (130) is arranged to couple light into the first layer, which acts as a light guide. At least one surface of first layer is further provided with at least one optical element (120) for outcoupling light from the first layer.

## Description

### Technical Field

The present disclosure relates generally to covers for electromagnetic transmitting and receiving elements, such as radar devices and is specifically directed to radar covers for use in vehicles as well as methods of manufacture of the same.

### Background

Electromagnetic transmitter and receiver elements or are commonly used as a radar system in vehicles for detecting the speed and range of objects for collision avoidance and adaptive cruise control systems. These elements are typically located at the front of the vehicle but may also be present at the side or rear. They are provided with a cover, which is often domed and be referred to as a radome, which protects the emitter and receiver elements from the elements and may also serve as a decorative component, for example, by supporting an emblem of the vehicle manufacturer. The cover must be substantially transparent to the radio waves of interest and to this end is preferably of uniform thickness and devoid of discontinuities and angles to minimise reflection and absorption of radio waves.

WO 2012/130033 A1, EP3300169A2, EP3495186A1 all describe radar covers for vehicles that carry a decorative element in the form of a metal layer, foil or similar. A disadvantage with these radar covers is that the design or emblem is not always clearly distinguishable particularly at night or in conditions of low lighting. It would thus be advantageous to illuminate the emblem to better identify the car brand or to improve the overall design possibilities of the vehicle. However, providing lighting in a radar cover presents a particular challenge due to the limited product dimensions, high number of components and the requirement that the radar function not be impaired.

### Summary

It is an object of the present invention to provide an illuminated cover for an electromagnetic sensor, particularly a radar sensor that provides a uniform and homogenous luminance without impairing the operation of the sensor.

The above objects are achieved in a cover for an electromagnetic sensor as well as a method for fabricating a cover as defined in the accompanying claims.

In some embodiments, there is provided a cover for an electromagnetic sensor such as a radar sensor, the cover comprising a plate that is substantially transparent to electromagnetic radiation, the plate having a central portion destined to be disposed over an electromagnetic sensor and an outer rim, at least said central portion being of a substantially uniform thickness, the plate further defining an upper surface destined to face an observer and a lower surface destined to face an electromagnetic sensor, the plate comprising a first layer of an optically transparent material, at least one optical element being disposed on at least one of an upper and lower surface of the first layer for outcoupling light at least from an upper surface of the plate, a second layer being disposed on at least one of the upper and lower surfaces of the first layer, the second layer being of a second optically transparent material having a refractive index lower than that of the first layer and being substantially thinner than the first layer and a graphic layer arranged on outer surface of at least one of the second layers, the graphic layer being of an optically opaque and/or reflective material.

By providing a cover with a multilayer plate, the impact on the function of the electromagnetic sensor is minimised as air-material interfaces are not increased over conventional radome structures. A first layer can serve as a light guide providing a homogeneous background illumination by virtue of at least one outcoupling optical element. The graphic layer provides a decorative component while the second layer protects from unwanted light leakage from the first layer due to the graphic layer or impurities that may deposit on the plate.

In a preferred embodiment, the second layer is arranged on both an upper and lower surface of the first layer and thus limits light leakage from both sides of the first plate.

The refractive index of the first layer is preferably between 1.3 - 1.6, and more preferably between 1.5 - 1.6, while second layer preferably has a refractive index of between 1.15 - 1.3.

The thickness of the second layer is preferably between 1 - 6 µm, and still more preferably between 2 - 3 µm to limit the impact on the sensor function.

In a preferred embodiment, the at least one optical element comprises a light diffusing surface on the first layer. This may be a surface comprising regular or irregular microstructures, grooves or granular elevations.

In an alternative embodiment, the at least one optical element may comprise a light diffusing material applied to or integrated with said first layer.

To improve the durability of the cover plate and thus maintain the look and function of this plate, it preferably comprises at least one protective outer layer. This layer may be a protective lacquer. This layer is particularly useful for protecting the graphic layer, when this is on an upper surface of the second layer and hence is vulnerable to impacts and wear from the environment.

In a particularly advantageous embodiment, the lower surface of the plate may be provided with an optically reflective layer. This improves the efficiency of the plate and the homogeneity of the illumination perceived by an observer at the upper surface of the plate, particularly when the graphic layer is on an upper surface of the second layer, i.e. on an outwardly facing surface.

The cover may further comprise at least one light source disposed adjacent the outer rim of the first layer and arranged to couple light into the first layer. By positioning a light source at the edge of the plate, this source will be effectively hidden from view, so reducing glare for the observer.

The obscuring of the light source from the view of an observer is improved in a preferred embodiment in which the cover comprises a frame coupled to the outer rim of the plate, the frame being of a light blocking material and adapted to accommodate the at least one light source. In this way, the light source and accompanying electronics are also protected.

In some embodiments, the frame is arranged to extend under the plate to enclose a space, the frame being substantially transparent to electromagnetic radiation. The frame and plate thus together enclose a space for protecting the light sources and accompanying electronics, while the cover as a whole is designed to limit the attenuation of the electromagnetic waves to and/or from the sensor.

In an alternative embodiment, the frame is arranged to extend under the plate to enclose a space adapted to accommodate an electromagnetic sensor. Thus, the sensor may also be located within the cover, i.e. between the plate and the frame, which reduces the number of elements the electromagnetic waves must pass through and hence minimises the impact on the sensor function, while simultaneously being protected.

In some embodiments, the plate is substantially curved in cross section, preferably domed with a substantially uniform angle of curvature in cross section at least in the central portion. Preserving a uniform angle of curvature limits the interference sustained by the electromagnetic radiation.

The present invention further relates to a method of fabricating a cover for an electromagnetic sensor as described previously. This method includes the steps of: providing a first layer of a first refractive index, forming at least one optical element on one of an upper or lower surface of the first layer, said optical element being adapted to outcouple light at least from an upper surface of the plate, providing a second layer at least on an upper surface of the first layer, the second layer being of a lower refractive index than the first layer, at least partially covering the second layer with a graphic layer.

Preferably, the step of providing the first layer includes moulding a plastic material, such as PC or PMMA, for example by injection moulding.

The at least one optical element may be formed by applying an optically diffusing material and preferably by moulding a diffusing material together with said plastic material in a 2K process. Additionally or alternatively, the at least one optical element may be formed by forming light diffusing microstructures on a surface of the first plate.

Preferably, the method includes the step of applying an optically reflective layer to a lower surface of said plate.

The method may also include the application of a protective layer to an upper and lower surface of said plate.

Further steps of the method may include: attaching a frame to the rim of the first layer, where the attachment may be by mechanical means, such as screws, rivets, clips, deformation of the frame, adhesive tape adhesion, or alternatively by chemical means, such as glue, lacquer, electromagnetic force using magnets, electric charge; arranging at least one light source adjacent a rim of the first layer.

### Brief description of the drawings

The present disclosure will be better understood and further advantages will become apparent from the detailed description of a preferred embodiments that are presented with reference to the following drawings in which like parts have been labelled with like reference numerals.
Fig. 1 schematically illustrates an illuminated cover for radar in accordance with an embodiment of the present invention;
Fig. 2 schematically shows details of a cover structure;
Fig. 3 schematically shows a cover for radar in accordance with a further embodiment of the present invention;
Fig. 4 schematically illustrates a cover according to a further embodiment;
Fig. 5 schematically illustrates a still further embodiment of the cover; and
Fig. 6 illustrates the process of fabrication of a cover layer in accordance with the present invention.

### Detailed description

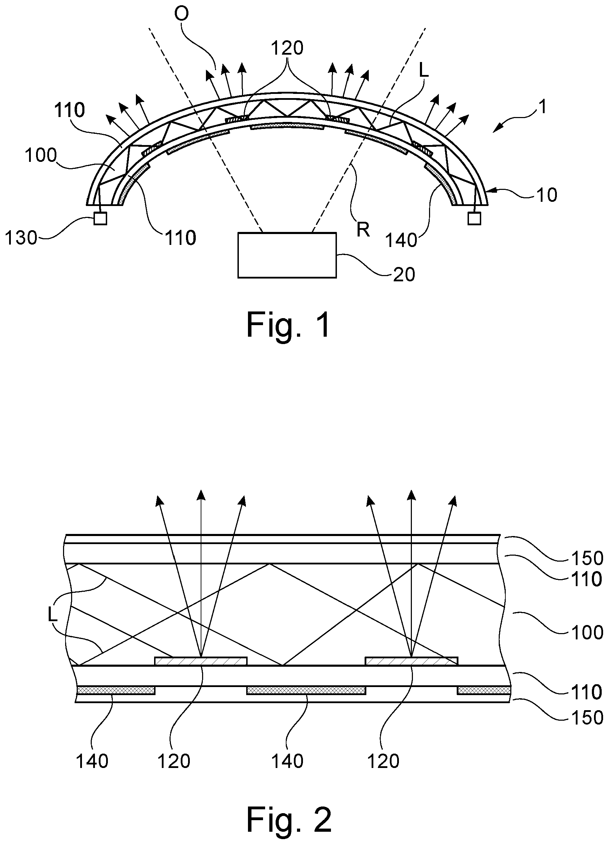

Fig. 1 shows a cover 1, also referred to as a radome, for a radar sensor in accordance with the present invention. The cover 1 comprises a plate 10 that is arranged over a radar sensor 20, which comprises one or more radio transmitters and/or receivers or antennas in the conventional manner. The radio waves emitted and/or received are depicted as a cone R in Fig. 1. The whole assembly can be attached to the front of a vehicle, for example, to a facia or grille of a vehicle.

The plate 10 is a multilayer structure with a substantially even and constant thickness to ensure good radar performance. The geometry of the plate 10 is also devoid of abrupt changes or discontinuities for the same reason. In the illustrated example, the plate 10 is domed with a substantially uniform degree of curvature at least in a central portion that coincides with a radar cone R. It will be understood, however, that the plate may be substantially planar, over its whole structure, or at least in the central portion located above the radar cone R.

As shown in Fig. 1, the plate 10 includes a first layer 100 that serves as a light guide. Two light sources 130 are arranged at the outer rim of this first layer and arranged such that the light is coupled into the first layer 100. These light sources 130 preferably comprise one or more LEDs provided with associated power supply and control circuitry. The LEDs may be configured to generate white light or light of a specific colour. Two light sources 130 are illustrated in the figures, but it will be appreciated that a single light source or more than two light sources may be used.

Fig. 2 shows detailed view of the layered structure of the plate 10. As is visible in Fig. 2, on both the upper and lower surfaces of the first layer 100 are arranged second layers, specifically optical insulating layers 110. These optical insulating layers 110 have a lower refractive index than the first layer 100 and thus ensure that light coupled into the first layer 100 is subjected to total internal reflection at the upper and lower surfaces of this layer 100 and thus propagates through it. The reflected light beams are illustrated in Figs. 1 and 2 as L. The optical insulating layer 110 serves to protect the light guide 100 from light leakage due to impurities that might deposit on the surface or graphic elements that could otherwise alter the refractive index boundary at the surface of the light guide 100. The second layer thus prevents unwanted glare for an observer and instead ensures that the cover 10 provides a homogenous background illumination. While the optical insulating layers 102 are shown on both the upper and lower surfaces of the light guide 100, in some embodiments it may be sufficient to provide such an insulating layer only on the upper surface of the light guide 100, i.e. on the surface that is directly outwardly and is thus open to the elements, providing that the light guide 100 has a refractive index that is higher than air, i.e. higher than 1. The light guide 100 is made of a material that is substantially transparent to both light and to the radio waves used by the radar sensors. Suitable materials include thermoplastic polymers, such as polycarbonate (PC) or PMMA. The thickness of the light guide 100 depends on the application but is preferably within the range of 1 to 5 mm. Preferably, the light guide 100 has a refractive index of between 1.3 and 1.6, preferably around 1.5. The optical insulating layer 110 is a thin film of depth between 1-6 µm, preferably between 2-3 µm and has a refractive index of less than 1.3, preferably 1.15 ― 1.3. The optical insulating layer 110 is preferably substantially transparent to light and optically clear and also substantially transparent to the radio waves used by the radar sensors. Suitable materials include siloxane resins. The insulating layer or layers 110 may be spray-coated or otherwise deposited on the underlying layer 100, or alternatively bonded to this layer by adhesive or heat treatment.

As shown in both Figs. 1 and 2, a number of optical elements 120 are provided on the bottom surface of the first layer 100. These optical elements 120 serve to outcouple light from the light guide 100 by diffusing light, that is, by causing a refraction, reflection and/or diffraction of the light at the surface of first layer which causes it to leak out of the light guide 100. As a consequence, the plate 10 is perceived as illuminated, although the light sources 130 are not visible. These optical elements 120 may be composed of diffractive surface relief structures such as microstructures or a roughened or granular surface formed on the lower surface of the light guide, for example, by chemical or mechanical etching of the light guide surface. The optical elements 120 may alternatively be formed by applying a diffusing material to the light guide surface, or alternatively by incorporating a light-diffusing material in the light guide 100 by using a 2K injection moulding process. The optical elements 120 shown in Figs. 1 and 2 are provided only on the lower surface of the light guide 100, however, it will be understood that they may instead be provided on the upper surface, or equally on both the lower and upper surfaces of the light guide 100. The optical elements 120 may be provided as several discrete elements arranged in a regularly spaced pattern on the upper and/or lower surface of the light guide 100 to provide an even distribution of light over the surface of the cover plate 10. Alternatively, the optical elements 120 may formed as a single dispersing surface at a desired location on the light guide 100. The optical elements 120 may further be arranged to form a desired design, such as an emblem or logo, or the negative of a desired design, so that the observer will see an illuminated design or a shaded design.

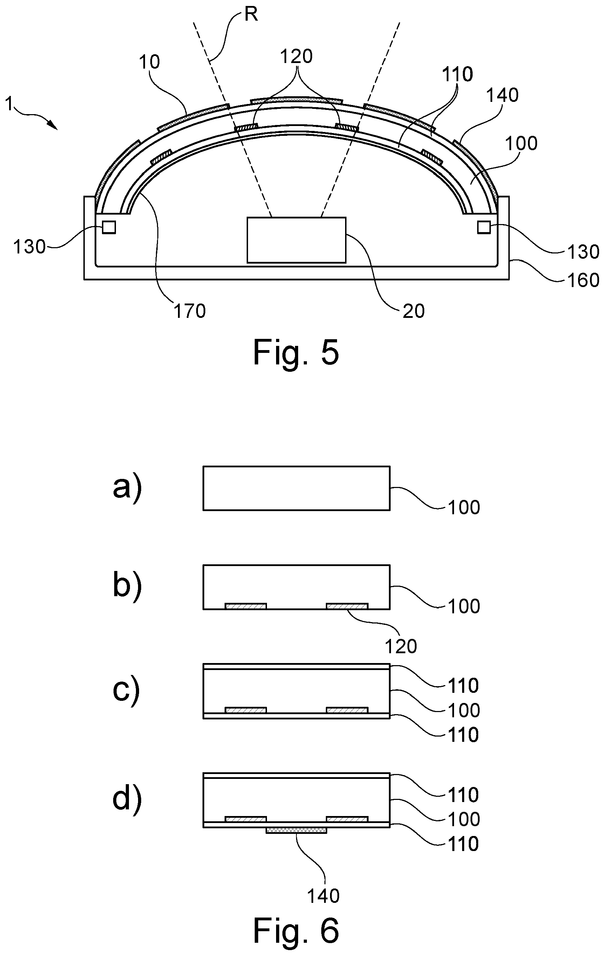

On the underside of the lower optical insulating layer 110 there is provided a graphic layer 140, comprising a film or foil, for example a metallic film or a foil on which a design is applied or that may be arranged to display a desired design such as the emblem or logo of a manufacturer. This film is preferably very thin, of the order of a few µm so that changes in thickness of the cover 10 between areas where the graphic layer is present and those where graphic material is absent have a negligible effect on the radiation emitted and/or received by the radar sensor 20. The material of the film 140 is substantially opaque and/or reflective to visible light, but substantially transparent to the electromagnetic radiation used by sensor 20. The design is visible through the multilayer structure of the light guide 100 and insulating layer 110. The graphic layer 140 may alternatively be formed on the upper surface of cover plate 10, i.e. on the outer surface of the upper insulating layer 110 (see Fig. 5), or even on the outer surface of both the upper and lower insulating layers 110. In all cases, the graphic layer 140 is separated from the first layer 100 by the optically insulating layer 110 to preclude the risk of light leakage that may otherwise occur on the boundary between the graphic layer 140 and first layer 100. When the optical elements 120 are formed in a specific design as described above, the graphic layer 140 may advantageously be arranged to occupy the spaces between the optical elements 120 so that the design is visible not only by the presence of the graphic layer but also by the illuminated portions between the graphic elements. In this way, a desired shape may be displayed as an illuminated design or alternatively as the negative of an illuminated design.

As shown in the detailed section illustrated in Fig. 2, the cover plate 100 may also include an outer protective layer 150 applied to the upper and/or lower surface. This protective layer 150 is preferably a varnish or resin of sufficient hardness to protect the surface of the cover, and particularly the graphic layer 140, from wear and scratches. In addition, the protective layer 150 may be used to compensate for differences in thickness caused by the application or removal of the graphic layer. The protective layer 150 is omitted from the remaining figures in the interests of clarity.

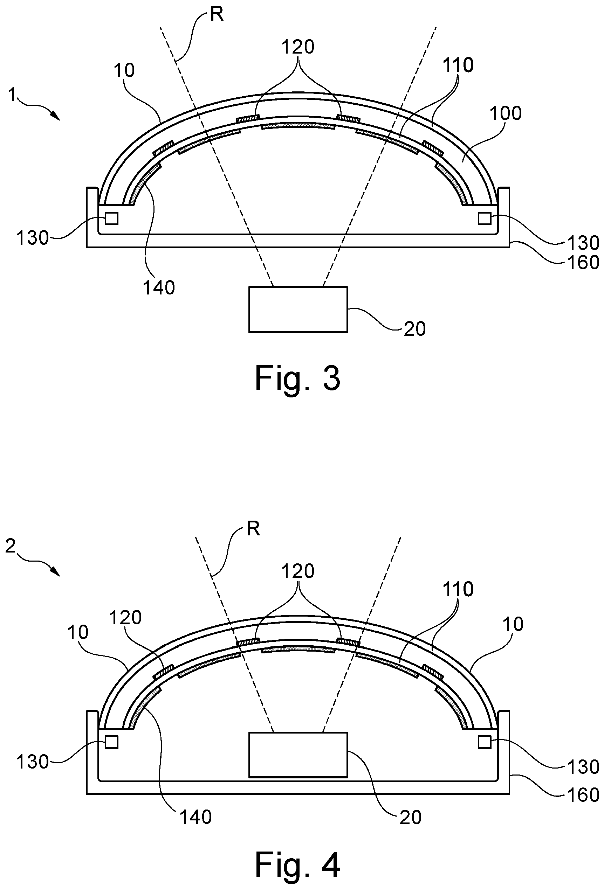

Turning now to Fig. 3 there is shown an arrangement of the cover 1 in accordance with a further embodiment of the invention. In Fig. 3 the cover 1 includes a frame 160 that extends downwards from the lower rim of cover plate 10 and under the cover plate 10 to enclose a space bordered by cover plate 10 and frame 160. The light sources 130 and associated electronics are located within this space. The frame 160 serves to block unwanted light and also protect the one or more light sources 130 and associated electronics. The frame 160 may also be provided with coupling elements, such as clips, screw holes or the like, that enable the cover 1 to be mounted over a radar sensor 20 on a vehicle, for example. The frame 160 is of a substantially optically opaque material, preferably of moulded plastic formed by injection moulding. The frame 160 may be fixed to the outer rim of the cover plate 10 by mechanical means, such as screws, rivets, clips, deformation of the frame 160, adhesive tape, or the like, chemical means, such as glue or lacquer, electromagnetic force using magnets, electric charge, or similar or by any other suitable fixing method.

As shown in Fig. 3, the cover 1 including the cover plate 10 and frame 160 may be arranged over a radar sensor 20, such that the radio waves illustrated by the cone R must pass through both the frame 160 and the cover plate 10. In this case, the frame 160 must be substantially transparent to the radio waves transmitted and/or received by the sensor 20. In addition, the spacing between the frame 160 and the cover plate 10, at least in the central area of the cover 1 that corresponds to the radio wave cone R, is chosen to minimise the attenuation of radio waves. In an alternative arrangement, the frame 160 does not extend over the whole space occupied by the plate 10 as shown in Fig. 3, but instead covers only part of the way under the cover plate 10 such that the space is not enclosed, but the light sources 130 are protected and light leakage from the light sources 130 at the edge of the plate 10 are precluded or minimised.

Fig. 4 shows a further embodiment of the cover 1. In this figure, the radar sensor 20 is accommodated between the frame 160 and the cover plate 10, i.e. frame 160 and plate 10 together form a housing enclosing a protective space within which the radar sensor 20 light sources 130 and other electronic components may be accommodated.. This arrangement reduces the attenuation of the radar signal as these pass through only two boundaries, namely the two outer surfaces of the cover plate 10.

In some embodiments, the frame 160 is essentially annular with an outer edge that essentially corresponds to that of the plate 10 or extends slightly beyond this, and an inner edge that extends inside the outer rim of the plate 10 to provide an essentially annular place serving as a protective housing for the light sources 130 and associated electronics. This annular space may be closed. In such an arrangement, the frame does not impact on the performance of the radar sensor 20 as it is not traversed by the conde R.

Turning now to Fig. 5 there is shown a further embodiment of the cover 1. The cover 1 illustrated in Fig. 5 is similar to that shown in Fig. 4 with the notable difference that a graphic layer 140 is provided on the upper side of the cover plate 10, i.e. on the outer surface of the upper optically insulating layer 110. As discussed above, a hardened protective layer 150 is preferably applied over the graphic layer, although this is not shown in Fig. 5. The embodiment of Fig. 5 also includes an optically reflective layer 170 that is applied to a lower surface of the cover plate, specifically on the outer surface of the lower optically insulating layer 110. If a graphic layer 140 is present on the underside of the cover plate 10, the optically reflective layer 170 is applied over that layer, i.e. on the outside of that layer, such that an observer can perceive the graphic layer 140 on top of the optically reflective layer 170. The optically reflective layer 170 serves to improve the efficiency and homogeneity of the illumination of the cover plate 10 by reflecting all light out of the cover plate 10. The layer 170 is preferably a white or pale film or coating, e.g. paint or pigmented lacquer of a few µm in thickness that is applied to the remaining structure of the cover plate 10 by adhesion or thermal bonding or another suitable manner. The optically reflective layer may also serve as a protective layer, or alternatively be coated with a protective layer 150

Fig. 6 shows the steps of a process for manufacturing a cover plate 10 according to the embodiments described above. In a first step designated a) the first light guide layer 100 is formed by injection moulding into the desired domed or planar shape of the cover plate 10. At step b) one or more optical elements are provided at the lower or upper surface of the light guide layer 100. These optical elements may be formed by mechanical means or chemical etching to create structured or roughened diffusing surfaces, or by application of a diffusing material to the surface of the layer 100 . Alternatively, the optical elements may be formed integrally with the light guide 100, for example by 2K injection moulding of a diffusing material and thus be formed simultaneously with step a). At step c) optical insulating layers 110 are applied to the upper and/or lower surfaces of the light guide layer 100. These optical insulating layers 110 may be applied directly to the surface of the light guide 100 and optionally hardened or cured, or applied as a separate film that is bonded to the surface of the light guide 100 by chemical or mechanical means. At step d) a graphic layer is applied to at least one of the outer surfaces formed by the optical insulating layers 110. This graphic layer 140 may be a metallization layer which is then partially removed to form the desired design by use of a laser or chemical etching. Alternatively, the graphic layer may be a foil on which a design is applied. The foil is then hot stamped to the optical insulating layer 110.

The process may include further steps, for example the application of a protective layer 150 in the form of a lacquer, for example can be applied to the outer surface of the plate, but particularly over the graphic layer 140 to protect this and possibly compensate for variations in thickness. An optically reflective layer 170 may be applied prior to this step on the lower surface of the plate 10, i.e. on the surface that faces the radar sensor 20 and is directed away from the observer.

It will be understood that the examples and embodiments described herein can be used in various combinations and sub-combinations.

### List of reference numerals

- R: Radar cone
- L: light path
- O: Out-coupled light
- 10: Radome
- 20: Radar emitter/receiver
- 100: Light guide
- 110: Optical insulator
- 120: Optical element
- 130: Light source
- 140: Graphic layer
- 150: Protective layer
- 160: Frame
- 170: Reflective layer

## Claims

1. A cover for an electromagnetic sensor, such as a radar sensor (20), said cover (1) comprising a plate (10) that is substantially transparent to electromagnetic radiation, said plate (10) having a central portion destined to be disposed over an electromagnetic sensor (20) and an outer rim, at least said central portion being of a substantially uniform thickness, said plate further defining an upper surface destined to face an observer and a lower surface destined to face an electromagnetic sensor, said plate (10) comprising a first layer (100) of an optically transparent material, at least one optical element (120) being disposed on at least one of an upper and lower surface of said first layer (100) for outcoupling light at least from an upper surface of said plate (10), a second layer (110) being disposed on at least one of the upper and lower surfaces of said first layer (110), the second layer (110) being of a second optically transparent material having a refractive index lower than that of said first layer (100) and being substantially thinner than said first layer (100) and a graphic layer (140) arranged on outer surface of at least one of said second layers (110), said graphic layer being of an optically opaque and/or reflective material.

2. A cover as claimed in any previous claim, wherein said first layer (100) has a refractive index of 1.3 - 1.6, preferably 1.5 - 1.6, and said second layer (110) preferably has a refractive index of 1.15 - 1.3.

3. A cover as claimed in any previous claim, wherein said second layer (110) has a thickness of 1 - 6 µm, preferably of 2 - 3 µm.

4. A cover as claimed in any previous claim, wherein said at least one optical element (120) comprises a light diffusing, reflecting and/or refracting surface on said first layer (100).

5. A cover as claimed in any previous claim, wherein said at least one optical element (120) comprises a light diffusing, reflecting and/or refracting material applied to or integrated with said first layer (100).

6. A cover as claimed in any previous claim, wherein said at least one optical element (120) comprises a light diffusing, reflecting and/or refracting material applied to or integrated with said first layer (100).

7. A cover as claimed in any previous claim, further comprising at least one light source (130) disposed adjacent the outer rim of the first layer and being arranged to couple light into said first layer (100).

8. A cover as claimed in any previous claim, further comprising a frame (160) coupled to the outer rim of said plate (10), said frame being of a light blocking material and adapted to accommodate at least one light source.

9. A cover as claimed in claim 8, wherein said frame (160) is arranged to extend under said plate (10) to enclose a space, said frame being substantially transparent to electromagnetic radiation.

10. A cover as claimed in claim 8, wherein said frame (160) is arranged to extend under said plate to enclose a space adapted to accommodate an electromagnetic sensor.

11. A method of fabricating a cover (1) for an electromagnetic sensor according to any previous claim, said method including the following steps:
- providing a first layer (100) of a first refractive index,
- forming at least one optical element on one of an upper or lower surface of said first layer, said optical element being adapted to outcouple light at least from an upper surface of said plate,
- providing a second layer (110) at least on an upper surface of said first layer (100), said second layer being of a lower refractive index than said first layer,
- at least partially covering said second layer with a graphic layer.

12. A method as claimed in claim 11, wherein said step of providing said first layer includes moulding a plastic material, such as PC or PMMA.

13. A method as claimed in claim 11 or 12, wherein said step of forming at least one optical element includes applying an optically diffusing material, preferably by moulding a diffusing material together with said plastic material in a 2K process.

14. A method as claimed in any one of claims 11 to 13, wherein said step of forming at least one optical element includes forming light diffusing microstructures on a surface of said first plate.

15. A method as claimed in any one of claims 11 to 14, further comprising applying an optically reflective layer to a lower surface of said plate.
